# EUROPÄISCHE PATENTSCHRIFT

(11) **EP 0 855 302 B1**
(45) Veröffentlichungstag und Bekanntmachung des Hinweises auf die Patenterteilung: **02.05.2002**
(21) Anmeldenummer: 98101327.9
(22) Anmeldetag: 27.01.1998
(51) Int. Cl.: B60J 7/12, B60J 1/18

(54) **Faltverdeck für Fahrzeuge, insbesondere Cabriolets**
Soft top for vehicles, particularly for convertibles
Capote flexible pour véhicules, en particulier pour cabriolets

(30) Priorität: 28.01.1997 DE 19702886
(43) Veröffentlichungstag der Anmeldung: 29.07.1998
(73) Patentinhaber: PARAT Automotive, Schönenbach GmbH + Co. KG, 42897 Remscheid (DE); Bayerische Motoren Werke Aktiengesellschaft, 80788 München (DE)
(72) Erfinder: Blöchl, Armin, 94089 Neureichenau (DE); Kasparek, Manfred, 94089 Neureichenau (DE); Siring, Harald, 81377 München (DE); Demmel, Dieter, 86929 Penzing (DE); Märkl, Markus, 84130 Dingolfing (DE); Striegl, Theodor, 84140 Gangkofen (DE)
(74) Vertreter: Patentanwälte Ostriga & Sonnet

(56) Entgegenhaltungen:
- EP-A- 0 530 134
- DE-A- 3 416 330

## Beschreibung

Die Erfindung bezieht sich auf ein Faltverdeck für Fahrzeuge mit einer formstabilen Heckscheibe, die beim Öffnen des Verdecks aus einer aufgerichteten Gebrauchsstellung in eine abgelegte Nichtgebrauchsstellung abklappbar ist, wobei die Heckscheibe in einen Verdeckbezug eingefaßt ist, der entlang seines unteren Randes mindestens abschnittsweise mit einem schwenkbaren, im wesentlichen U-förmigen Stoffhaltebügel bzw. Spannbügel verbunden ist und wobei die Heckscheibe in einer zum Fahrzeugheck hin über den Stoffhaltebügel geschobenen Stellung ablegbar ist.

Nur in Folge einer solchen Rückverschiebung der Heckscheibe ist es möglich, diese als großformatige Heckscheibe auszuführen. Feste Heckscheiben werden gegenüber flexiblen Heckscheiben aus PVC bevorzugt, die weder beheizbar noch kratzfest sind und insbesondere auch infolge Versprödung brechen können. Da sich feste Heckscheiben jedoch nicht falten lassen, sind besondere Vorkehrungen zu treffen, sie bei geöffnetem Faltverdeck in dem zur Verfügung stehenden Raum, insbesondere einem durch einen Deckel verschließbaren Verdeckkasten, unterzubringen. Andererseits besteht der Wunsch, die feste Heckscheibe möglichst großflächig zu gestalten, um einen großen Sichtbereich nach hinten zu ermöglichen und das Fahrzeugheck bei geschlossenem Faltverdeck besser übersehen zu können.

Um dies zu erreichen, liegt der EP 0 530 134 A1, von der die vorliegende Erfindung ausgeht, die Aufgabe zugrunde, die untere Randseite der Heckscheibe bei geschlossenem Faltverdeck in einem relativ geringen Abstand zum Stoffhalteprofil verlaufen zu lassen, wobei dennoch ein erheblicher Rückschiebeweg der Heckscheibe möglich bleiben soll.

Entsprechend der EP 0 530 134 A1 wird diese Aufgabe im wesentlichen dadurch gelöst, daß der Verdeckbezug beidseitig der Heckscheibe mit einer längenvariablen Gewebezone versehen ist, die beim Ablegen des Faltverdecks durch die Rückverschiebung der Heckscheibe auseinanderziehbar und beim Aufrichten des Faltverdecks in die geschlossene Gebrauchsstellung auf ihre Ausgangslänge verkürzbar sind. Diese längenvariablen Gewebezonen sind jeweils von einer Gewebefalte des Verdeckbezuges ausgebildet, die bei geschlossenem Faltverdeck über Spannkräfte am Verdeckbezug in einer gestrafften Überlappungsstellung gehalten sind.

Beim Rückverschieben der Heckscheibe in ihre abgelegte Nichtgebrauchsstellung werden partielle Überdehnungen des Verdeckbezuges vermieden, die beidseits der Heckscheibe ohne diese von der EP 0 530 134 A1 vorgeschlagenen Maßnahmen auftreten könnten. Außerdem ermöglichen die längenvariablen Gewebezonen beim Ablegen des Verdecks ein möglichst weites Verschieben der Heckscheibe in Richtung zum Fahrzeug.

Die längenvariablen Gewebezonen bilden relativ großvolumige Taschen im Verdeckbezug auf, und zwar neben den seitlichen unteren Randbereichen der Heckscheiben, wo an die Mittelbahn des Verdeckbezuges, in die die Scheibe eingelassen ist, die beiden Seitenbahnen des Verdeckbezugs links und rechts angenäht sind.

In die Taschen der Gewebefalten können Staub, Schmutz oder andere Verunreinigungen, vor allem aber auch Feuchtigkeit und Schnee eintreten. Dadurch sind diese Verdeckbezugbereiche gegen vorzeitigen Verschleiß insbesondere durch Abbrasion und Schimmelbefall gefährdet. Beim Übergang vom geschlossenen Faltverdeck verformen sich die faltenbildenden Bereiche des Verdeckbezugs erheblich und bleiben in dieser stark verformten Lage im Verdeckkasten abgelegt. Sie können sich daher, vor allem in wetterfreundlichen Gegenden, in denen ein Verdeck über Tage oder Wochen, ja sogar Monate geöffnet bleibt, so nachhaltig verformen, daß eine Straffung der Faltung bei sich schließendem Verdeck nicht mehr zuverlässig gewährleistet ist.

Zusätzlich zu dem ohnehin komplizierten Fertigungsverfahren ist in der EP 0 530 134 A1 auch daran gedacht, ein Aufklaffen der Gewebefalten bei geschlossenem Verdeck dadurch zu unterbinden, daß im Umschlag der Gewebefalten jeweils ein etwa 10 mm breites Blattfederelement angeordnet ist. Die Anordnung und Anbringung solcher Blattfederelemente verkomplizieren Konstruktion und Fertigung des Verdecks noch weiter.

Hiervon ausgehend liegt der vorliegenden Erfindung im wesentlichen die Aufgabe zugrunde, ein Faltverdeck der eingangs umrissenen und aus der EP 0 530 134 A1 bekannten Art verfügbar zu machen, welches sich in vereinfachter Form herstellen läßt und in besonders einfacher Weise das Rückverlagern der starren Heckscheibe bei sich öffnendem Faltverdeck gestattet und somit den Einsatz großflächiger Scheiben ermöglicht, deren unterer Rand möglichst nahe an den Stoffhaltebügel heranreichen kann.

Die Erfindung löst diese Aufgabe im wesentlichen dadurch, daß die beiden seitlichen Verdeckbezugbahnen in ihrem jeweiligen Randbereich mittels einer, insbesondere schlittenartigen, Gleitführung von der unmittelbaren Befestigung an den U-Schenkeln des Stoffhaltebügels entkoppelbar sind, derart, daß beim Öffnen des Verdecks die seitlichen Verdeckstoffpartien relativ zum Stoffhaltebügel bzw. Spannbügel zum Fahrzeugheck hin verlagerbar sind.

Mit der Verschiebung der Heckscheibe nach hinten können sich so auch die seitlichen Verdeckstoffpartien durch Gleiten entlang den U-Schenkeln des Stoffhaltebügels diesen gegenüber nach hinten verschieben. Beim Ablegen des Verdecks, z.B. in den Verdeckkasten, zieht die Heckscheibe die seitlichen Verdeckstoffpartien mit nach hinten, obwohl der Stoffhaltebügel diese Bewegung nicht mitmacht. Der freiwerdende Stoff ermöglicht einen fließenden Ablagevorgang.

Für die Erfindung ist es auch wichtig, daß der Verdeckbezug mit seinen unteren Randpartien im Bereich der Übergänge von U-Schenkeln des Stoffhaltebügels zu dem quer zur Fahrzeugrichtung gelegenen Schenkel des Stoffhaltebügels, also im Bereich der Bügelradien, nicht am Stoffhaltebügel befestigt ist, so daß sich beim Öffnen des Verdecks und Verlagern der Heckscheibe nach hinten in diesen Zonen, in denen nur relativ wenig Verdeckstoff vorhanden ist, eine Stofflose bilden kann.

Weiterbildungen der Erfindung sind in den abhängigen Ansprüchen 2 bis 6 angegeben.

Die Erfindung wird nachfolgend anhand der beigefügten Zeichnungen, die ein Ausführungsbeispiel skizzenhaft wiedergeben, näher beschrieben. Es zeigen:
- Fig. 1: eine schematische Ansicht des geschlossenen Verdecks, schräg von hinten betrachtet,
- Fig. 2: einen Teillängsschnitt durch einen Seitenabschnitt (U-Schenkel) des Stoffhaltebügels, an dem der seitliche Verdeckstoff randnah längsgleitbar mittels eines Schlittens angelenkt ist,
- Fig. 3: die Stellung des Schlittens bezüglich des Stoffhaltebügels in der Fig. 1 entsprechenden Stellung,
- Fig. 4: das Faltverdeck in teilweise geöffnetem Zustand,
- Fig. 5: die zugehörige Stellung des Schlittens,
- Fig. 6: eine noch weiter geöffnete Stellung des Faltverdecks,
- Fig. 7: die sich dabei einstellende Schlittenstellung,
- Fig. 8: das vollständig geöffnete Verdeck, und
- Fig. 9: die dieser abgelegten Verdeckstellung entsprechende Stellung des Schlittens.

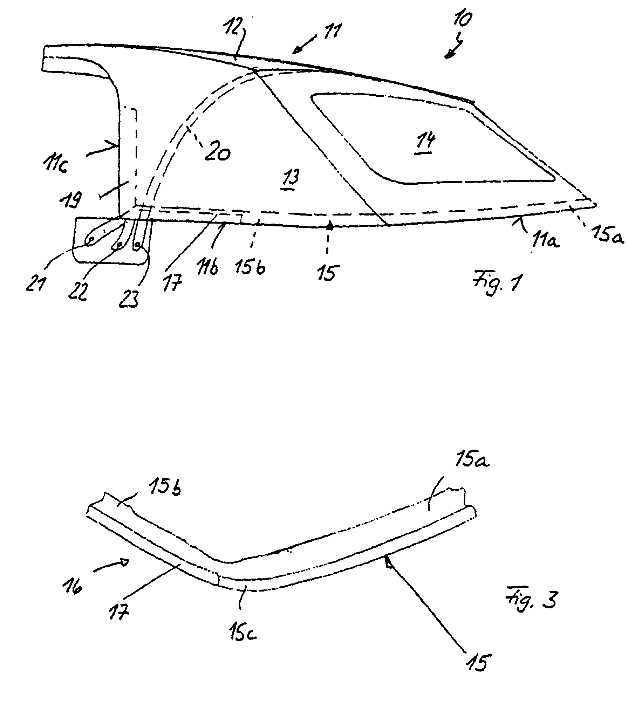

Entsprechend Fig. 1 weist das Faltverdeck 10 einen Verdeckbezug 11 auf mit einer Mittelbahn 12 und zwei spiegelbildlich zueinander daran befestigten Seitenbahnen 13. Im rückwärtigen, schräg verlaufenden Abschnitt 12a der Mittelbahn 12 ist eine formstabile Heckscheibe 14, insbesondere aus Hartglas, eingearbeitet. Diese Heckscheibe 14 soll möglichst großflächig sein, so daß von der rückwärtigen Verdeckstoffpartie 12a im Prinzip nur ein schmaler, um die Heckscheibe 14 umlaufender Rahmen bestehen bleiben soll.

Der hintere Rand 11a des Verdeckstoffs verläuft zusammen mit den den Fahrzeugseiten zugeordneten Verdeckstoffrändern 11b in einer U-Form entsprechend der U-Form des innenliegenden Stoffhaltebügels 15. Dieser Stoffhaltebügel 15 gliedert sich somit in einen zentralen Steg 15a und zwei zueinander etwa parallele, wenngleich in der Praxis meist leicht divergierende oder im Bogen verlaufende Seitenschenkel 15b.

Üblicherweise sind die Verdeckbezug-Randabschnitte 11a und 11b mit den entsprechenden Abschnitten 15a und 15b des Stoffhaltebügels 15 fest verbunden. Entsprechend der Erfindung sind jedoch die seitlichen Randpartien 11b des Verdeckbezugs 11 über eine im wesentlichen in Fahrzeuglängsrichtung verlaufende Schiebeführung 16 an die Schenkel 15b des Stoffhaltebügels 15 angeschlossen. Die Schiebeführung 16 umfaßt jeweils einen Schlitten 17, der mit dem seitlichen Verdeckstoffrand 11b fest verbunden ist und eine am Stoffhaltebügel-Schenkel 15b befestigte Schlittenführung 18 aufweist.

Wie Fig. 1 zeigt, erstreckt sich der Schlitten 17 bei geschlossenem Verdeck in einem Bereich nahe einem Haltewinkel 19, an dem der sich im wesentlichen vertikal erstreckende Randabschnitt 11c des Verdeckbezuges 11 angebracht ist. Im geschlossenen Zustand des Verdecks entsprechend Fig. 1 befindet sich der Schlitten 17 in seiner am weitesten nach vorn verlagerten Position. In dieser geschlossenen Verdeckstellung ist ein nicht dargestellter vorderer Windlaufspriegel fest mit dem oberen Windschutzscheibenrand verankert. Das Verdeck ist straff gespannt, und die Gleitführung 16 dadurch in der genannten Position sicher gehalten.

Bestandteil des Faltverdecks 10 ist auch das für die Kinematik erforderliche Verdeckgestänge. Dieses umfaßt u.a. außer den Haltewinkeln 19 und dem Stoffhaltebügel 15, der wegen seiner Funktion auch "Spannbügel" genannt wird, noch eine Reihe von Spriegeln, so insbesondere einen U-förmigen Eckspriegel 20.

Der Stoffhaltebügel 15 ist um eine mit 21 bezeichnete, quer zur Fahrtrichtung verlaufende horizontale Achse schwenkbar. In Fig. 1 rechts daneben befindet sich eine dazu parallele Achse 22 für die Verschwenkung des Haltewinkels 19 und, wiederum rechts daneben und erneut parallel, die Schwenkachse 23 für den Eckspriegel 20.

Das Faltverdeck 10 ist zur Ablage in einen karosserieseitigen Verdeckkasten bestimmt, der von einem im wesentlichen U-förmigen Verdeckkasten-Deckel verschließbar ist, dessen Anordnung und Funktion im wesentlichen derjenigen entspricht, wie sie in EP 0 530 134 A1 beschrieben ist, worauf hiermit Bezug genommen wird.

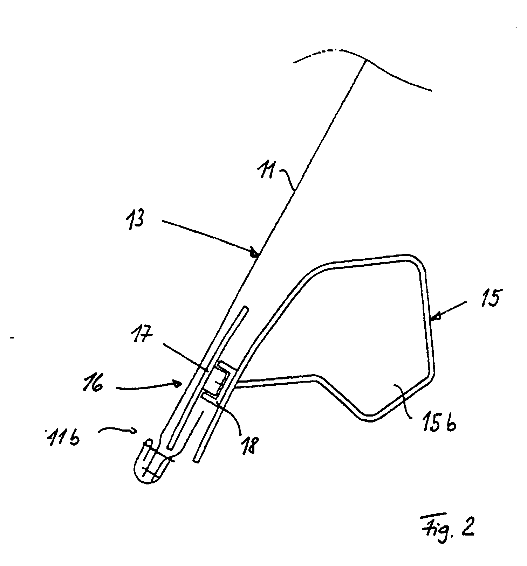

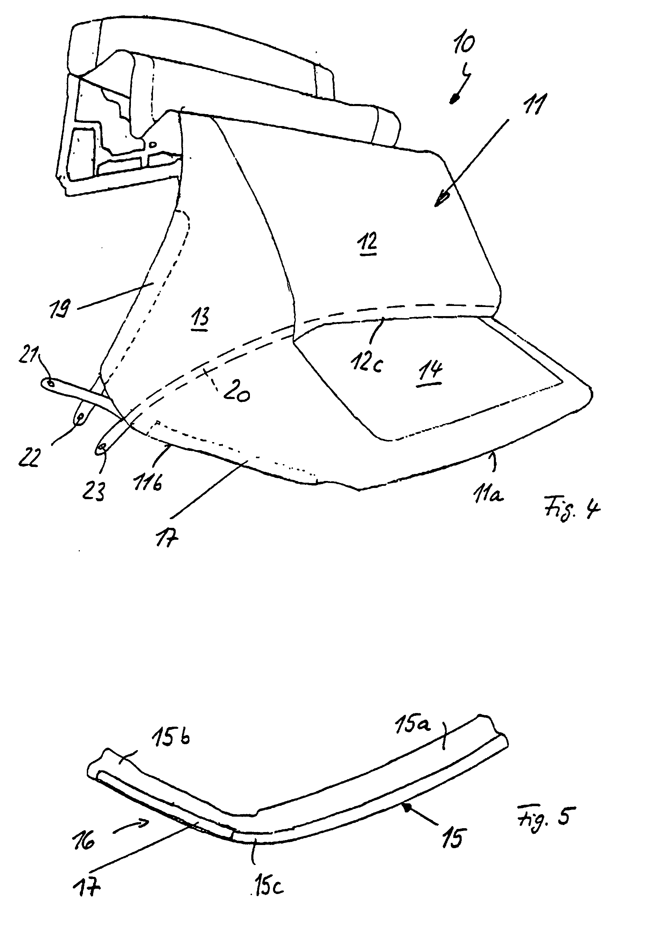

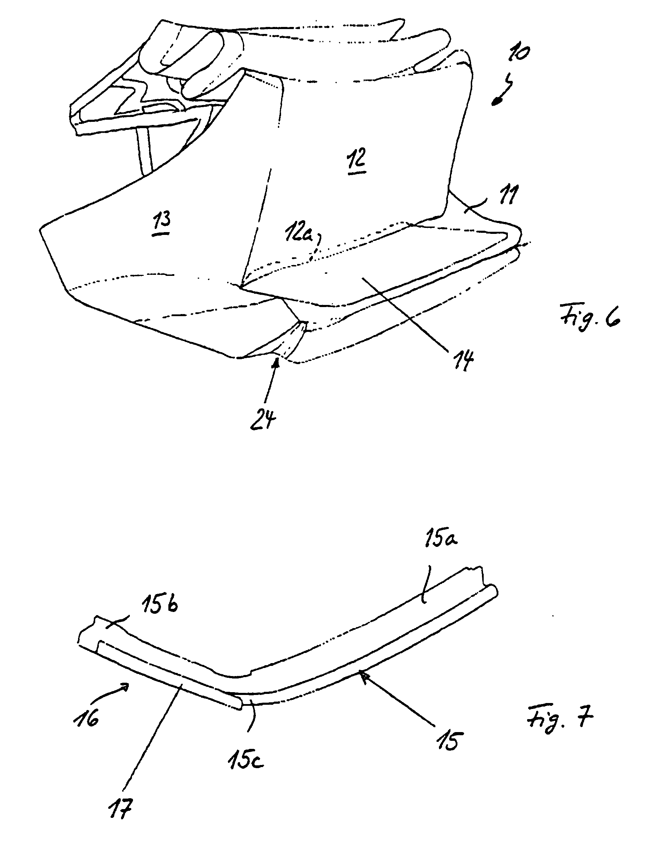

Um das entsprechend Fig. 1 geschlossene Faltverdeck 10 zu öffnen, werden die Verdeckverschlüsse entriegelt, und zunächst schwenkt der Stoffhaltebügel 15 um die Achse 21 nach oben, so daß ein Bewegungsraum für die Öffnung des Verdeckkasten-Deckels frei wird, der danach offengeschwenkt wird. Sodann senkt sich der Stoffhaltebügel 15 in den Verdeckkasten hinein, während die frontseitigen Partien des Verdecks entsprechend Fig. 4 eingefaltet werden. Dabei schwenkt auch der Eckspriegel 20 nach rückwärts und unten in seine Ablageposition, wodurch der über der Heckscheibe befindliche Verdeckstoffbereich 12c über den oberen Scheibenrand geschlagen wird.

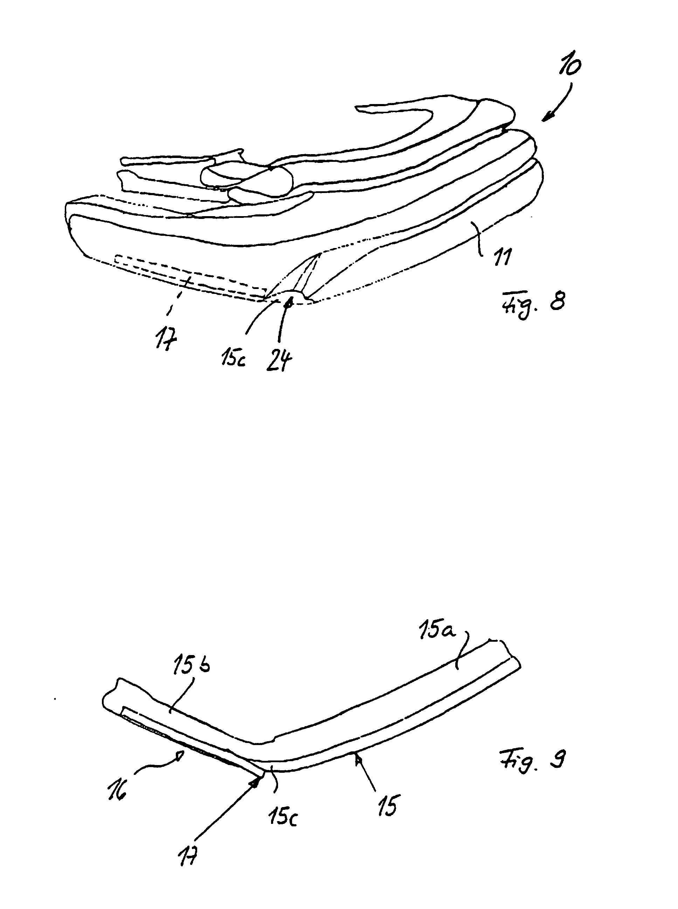

Da mit Beginn der Öffnungsbewegung des Verdecks der Verdeckstoff entspannt ist, kann sich nun der Schlitten 17 entsprechend der Verlagerungsbewegung des Verdeckstoffs 11 nach hinten bewegen. Im weiteren Verlauf der Öffnungsbewegung (Fig. 6) schiebt sich die Heckscheibe 14 über den hinteren, mit dem Stoffhaltebügel 15 verbundenen Verdeckstoffrand, und die seitlichen Partien des Verdeckstoffes können dieser ihnen aufgezwungenen Bewegung durch Verschieben des Schlittens folgen (Fig. 6 und 7), wohingegen der Stoffhaltebügel diese Bewegung nicht mitmacht.

Damit der Verdeckbezug im Übergangsbereich von den Seitenschenkeln 15b zu dem zentralen Querabschnitt 15a des Stoffhaltebügels 15 nicht unzulässig gedehnt wird, bildet sich hier eine Stofflose 24, also eine freie Einfaltungsmöglichkeit für den Verdeckstoff in diesem Bereich. Erreicht wird dies dadurch, daß der Verdeckstoffrand in diesem kritischen Bereich weder mit dem rückwärtigen Stoffhaltebügelabschnitt 15a noch mit dem Schlitten 17 fest verbunden ist, sondern im Bereich des Spannbügelradius 15c frei und unbefestigt verläuft.

Im geschlossenen Zustand des Faltverdecks 10 legt sich dieser für die Stofflose bestimmte Verdeckbezugabschnitt fest an den Stoffhaltebügelradius 15c an. Dies wird aufgrund der Verdeckbezugsstraffung erreicht. Diese Zonen können auf einfache Weise z.B. dadurch abgedichtet werden, daß an der Innenseite des Verdeckstoffrandabschnitts und/oder an der Außenseite des Spannbügelradius elastische Dichtungen angebracht sind.

Im vollständig geöffneten Zustand entsprechend den Fig. 8 und 9 ist der Schlitten 17 relativ zum Stoffhaltebügelschenkel 15b weitestmöglich nach hinten ausgefahren. Die Hartglasscheibe 14 liegt nun zwischen dem Steg 15a des Stoffhaltebügels 15 und dem Quersteg des Eckspriegels 20.

Die Erfindung zeichnet sich insbesondere dadurch aus, daß keine aufwendigen Steuermechanismen und Hebeltriebe erforderlich sind, um die Heckscheibe bei ihrem Ablegen nach hinten zu verlagern. Hierzu genügt die beim Ausführungsbeispiel als einfache Schlittenkonstruktion ausgeführte Schiebeführung, die die Bewegung des Verdeckbezugs in einer Richtung entlang den Spannbügelschenkeln vom Spannbügel entkoppelt und also diesbezüglich eine Relativbewegung ermöglicht.

Erreicht wird dies in vorteilhafter Weise ohne die Notwendigkeit, in den Verdeckbezug entfaltbare Verdeckstoffpartien in Form von Taschen od.dgl. einzuarbeiten. Das der Erfindung zugrundeliegende Verdeck bildet daher gegenüber einem Verdeck, das die Vorteile nicht erreicht, keine witterungs- und verunreinigungsanfälligen Nischen aus.

Zwar können sich auch im Bereich der Stofflosen während längerer Zeit abgelegtem Verdeck Falten bilden, doch werden diese mit Sicherheit bei gestrafftem Verdeck wieder vollkommen geglättet. Insoweit unterscheidet sich das erfindungsgemäße Verdeck nicht von herkömmlichen, bei denen sich Einfaltungen im abgelegten Zustand grundsätzlich vermeiden lassen.

Die Erfindung bezieht die Möglichkeit der großzügigen Rückverlagerung der starren Heckscheibe nicht aus der Schaffung von längenveränderbaren Stoffbereichen, die bei Nichtbedarf übereinanderliegende Verdeckstoffpartien und Taschen ausbilden, sondern aus der Längsverlagerung der seitlichen Verdeckstoffpartien relativ zum Stoffhaltebügel bzw. Spannbügel.

## Patentansprüche

1. Faltverdeck (10) für Fahrzeuge mit einer formstabilen Heckscheibe (14), die beim Öffnen des Verdecks (10) aus einer aufgerichteten Gebrauchsstellung in eine abgelegte Nichtgebrauchsstellung abklappbar ist, wobei die Heckscheibe (14) in einen Verdeckbezug (11) eingefaßt ist, der entlang seines unteren Randes mindestens abschnittsweise mit einem schwenkbaren, im wesentlichen U-förmigen Stoffhaltebügel bzw. Spannbügel (15) verbunden ist und wobei die Heckscheibe (14) in einer zum Fahrzeugheck hin über den Stoffhaltebügel (15) geschobenen Stellung ablegbar ist, **dadurch gekennzeichnet, daß** die beiden seitlichen Verdeckbezugbahnen (13) in ihrem jeweiligen Randbereich (11b) mittels einer Gleitführung (16) von der unmittelbaren Befestigung an den U-Schenkeln (15b) des Stoffhaltebügels (15), entkoppelbar sind, derart, daß beim Öffnen des Verdecks (10) die seitlichen Verdeckstoffpartien (11b) relativ zum Stoffhaltebügel bzw. Spannbügel (15) zum Fahrzeugheck hin verlagerbar sind.

2. Faltverdeck nach Anspruch 1, **dadurch gekennzeichnet, daß** die Gleitführung (16) als schlittenartige Gleitführung (16) mit Schlitten (17) und Schlittenführung (18) ausgebildet ist, wobei die Randbereiche (11b) des Verdecks (10) jeweils an einem Schlitten (17) befestigt sind, der relativ zu einer am jeweiligen U-Schenkel (15b) des Stoffhaltebügels (15) angeordneten Schlittenführung (18) verschiebbar ist.

3. Faltverdeck nach Anspruch 1 oder 2, **dadurch gekennzeichnet, daß** Randbereiche des Verdeckbezuges (11) im Bereich der Übergänge (15c) von den U-Schenkeln (Seitenschenkeln 15b) des Stoffhaltebügels (15) zu dem quer zur Fahrzeuglängsrichtung gelegenen Schenkel (Querschenkel 15a) des Stoffhaltebügels (15) als nicht mit dem Stoffhaltebügel (15) verbundene Stofflose (24) ausgebildet sind.

4. Faltverdeck nach Anspruch 3, **dadurch gekennzeichnet, daß** die als Stofflose (24) ausgebildeten Randbereiche des Verdeckbezuges (11) bei geschlossenem Verdeck (10) straff geglättet am Stoffhaltebügel (15) anliegen.

5. Faltverdeck nach Anspruch 4, **dadurch gekennzeichnet, daß** im Bereich der Stofflose (24) an der an der Innenseite des Verdeckstoffrandabschnitts (11b) elastische Dichtungen angeordnet sind.

6. Faltverdeck nach Anspruch 4, **dadurch gekennzeichnet, daß** im Bereich der Stofflose (24) an der Außenseite der Spannbügelrundung (15c) elastische Dichtungen angeordnet sind.

## Claims

1. Folding top (10) for vehicles, with a dimensionally stable rear window (14) which can be folded down when the folding top (10) is opened from a raised position of use to a laid-down position of non-use, the rear window (14) being set into a folding-top covering (11) which is joined along it lower edge, at least in sections, to a pivoting, essentially U-shaped fabric-retaining bow, or tensioning bow (15), and the rear window (14) being capable of being laid down in a position displaced towards the rear of the vehicle, over the fabric-retaining bow (15), **characterized in that** the two side folding-top covering webs (13) can be decoupled, in their respective edge regions (11b), from the direct attachment to the U-limbs (15b) of the fabric-retaining bow (15) by means of a guideway (16) in such a way that, upon opening of the folding top (10), the side folding-top fabric parts (11b) can be displaced, relative to the fabric-retaining bow or tensioning bow (15), towards the rear of the vehicle.

2. Folding top according to Claim 1, **characterized in that** the guideway (16) is designed as a slide-type guideway (16) with a slide (17) and slide guide (18), the edge regions (11b) of the folding top (10) each being attached to a slide (17) which can be displaced relative to a slide guide (18) disposed on the respective U-limb (15b) of the fabric-retaining bow (15).

3. Folding top according to either of Claims 1 or 2, **characterized in that**, in the region of the transitions (15c) from the U-limbs (side limbs 15b) of the fabric-retaining bow (15) to the limb (transverse limb 15a) of the retaining bow (15) which lies transversely relatively to the longitudinal direction of the vehicle, edge regions of the folding-top covering (11) are designed as fabric slack (24) which is not joined to the fabric-retaining bow (15).

4. Folding top according to Claim 3, **characterized in that** the edge regions of the folding-top covering (11) which are designed as fabric slack (24) lie against the fabric-retaining bow (15) in a tautly smoothed manner when the folding top (10) is closed.

5. Folding top according to Claim 4, **characterized in that** elastic seals are disposed on the inside of the folding-top fabric edge section (11b) in the region of the fabric slack (24).

6. Folding top according to Claim 4, **characterized in that** elastic seals are disposed on the outside of the tensioning bow curve (15c) in the region of the fabric slack (24).

## Revendications

1. Capote (10) pour véhicules avec une vitre arrière (14) à forme stable, qui est susceptible d'être abaissée par rabattement en une position de non utilisation, posée, lors de l'ouverture de la capote (10) depuis une position d'utilisation dressée, la vitre arrière (14) étant enchâssée dans un revêtement de capote (11) qui est relié le long de son bord inférieur, au moins par tronçons, à un étrier de maintien de toile ou étrier de serrage (15) sensiblement en forme de U pouvant pivoter, et la vitre arrière (14) est susceptible d'être déposée, en une position coulissée au-dessus de l'étrier de maintien de toile (15) en direction de l'arrière du véhicule, **caractérisée par le fait que** les deux bandes de revêtement de capote (13) latérale sont susceptibles d'être désaccouplées, dans leur zone de bordure (11b) respectives, vis-à-vis de la fixation directe sur les branches de U (15b) de l'étrier de maintien de toile (15), à l'aide d'un guidage coulissant (16), de manière que, lors de l'ouverture de la capote (10), les parties de toile de capote (11b) latérale puissent être déplacées vers l'arrière du véhicule, par rapport à l'étrier de maintien de toile ou l'étrier de serrage (15).

2. Capote selon la revendication 1, **caractérisée par le fait que** le guidage coulissant (16) est réalisé sous la forme de guidage coulissant (16) du genre d'un coulisseau, avec des coulisseaux (17) et un guidage de coulisseau (18), les zones de bordure (11b) de la capote (10) étant fixées chacune sur un coulisseau (17) déplaçable par rapport à un guidage de coulisseau (18) disposé sur la branche de U (15b) respective de l'étrier de maintien de toile (15).

3. Capote selon la revendication 1 ou 2, **caractérisée par le fait que** des zones de bordure du revêtement de capote (11) dans la zone des transitions (15c), entre les branches de U (branches latérales 15b) de l'étrier de maintien de toile (15) et la branche (branche transversale 15a), placée transversalement par rapport à la direction longitudinale du véhicule, de l'étrier de maintien de toile (15) sont réalisées sous la forme de pinces d'étoffe (24) reliées à l'étrier de maintien de toile (15).

4. Capote selon la revendication 3, **caractérisée par le fait que** les zones de bordure, réalisées sous la forme de pinces de toile (24), du revêtement de capote (11) sont en appui sur l'étrier de maintien de toile (15), de façon lissée et tendue, lorsque la capoté (10) est fermée.

5. Capote selon la revendication 4, **caractérisée par le fait que** des joints d'étanchéité élastiques sont disposés, dans la zone des pinces de toile (24), sur la face intérieure du tronçon de capote (11b).

6. Capote selon la revendication 4, **caractérisé par le fait que** des joints d'étanchéité élastiques sont disposés, dans la zone des pinces de toile (24), sur la face extérieure de l'arrondi d'étrier de serrage (15c).
